Europäisches Patentamt

European Patent Office

Office européen des brevets

(19)

(11) **EP 1 568 572 A2**

(12) **EUROPÄISCHE PATENTANMELDUNG**

(43) Veröffentlichungstag:
**31.08.2005 Patentblatt 2005/35**

(51) Int Cl.<sup>7</sup>: **B62D 5/00**, B62D 5/04,
B62D 6/04, B62D 6/00

(21) Anmeldenummer: **05001643.5**

(22) Anmeldetag: **27.01.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **28.02.2004 DE 102004009822**

(71) Anmelder: **ZF Lenksysteme GmbH
73527 Schwäbisch Gmünd (DE)**

(72) Erfinder: **Reinelt, Wolfgang
70374 Stuttgart (DE)**

(54) **Verfahren zum Betrieb eines Fahrzeug-Lenksystems mit Signalplausibilisierung**

(57)    Verfahren zum Betrieb eines Lenksystems für ein Kraftfahrzeug mit wenigstens einem lenkbaren Rad, wobei eine durch den Fahrer des Kraftfahrzeugs initiierte Lenkbewegung ($\delta_S$) und/oder weitere fahrzeugspezifische Parameter, insbesondere die Fahrzeuggeschwindigkeit ($v_x$), als Eingangssignale von einem Steuergerät empfangen werden und daraus ein Steuersignal zum Erzeugen der Lenkbewegung des lenkbaren Rades, insbesondere zum Realisieren von Nutzanwendungen, ermittelt wird. Ein Sicherheitsüberwachungsverfahren des Lenksystems durch eine Überwachung der Eingangssignale ($\delta_S$, $v_X$) des Steuergeräts mittels Sicherheitsfunktionen (e/e/pes_sf,app_sf) ist vorgesehen, wobei in einem ersten Schritt die Eingangssignale mit elektronikabhängigen Sicherheitsfunktionen (e/e/pes_sf) und in einem zweiten Schritt zusätzlich mit anwendungsbezogenen Sicherheitsfunktionen (app_sf) plausibilisiert werden, wobei für wenigstens ein Eingangssignal $v_X$ ein Zustand bestimmt wird, anhand dessen die Nutzanwendungen des Lenksystems konfiguriert werden.

Fig. 3

EP 1 568 572 A2

**Beschreibung**

Die Erfindung betrifft ein Verfahren zum Betrieb eines Lenksystems gemäß dem Oberbegriff von Anspruch 1.

Ein gattungsgemäßes Verfahren ist aus der DE 197 51 125 A1 bekannt. Dabei werden die vom Fahrer durch ein Lenkrad aufgebrachten Lenkbewegungen, der durch einen Sensor erfasste Lenkradwinkel, mittels eines Überlagerungsgetriebes mit den Bewegungen des Stellantriebes, dem Motorwinkel, überlagert. Die so entstandene überlagerte Bewegung wird über das Lenkgetriebe bzw. das Lenkgestänge an die lenkbar ausgelegten Räder zur Einstellung des Lenkwinkels weitergeleitet. Hierbei ist der Stellantrieb als Elektromotor ausgelegt. Das Funktionsprinzip bzw. die Nutzanwendungen eines solchen Servolenksystems bestehen insbesondere darin, dass die Lenkung durch die Übersetzung des Überlagerungsgetriebes indirekt ausgeführt werden kann und damit geringe Lenkradmomente erreicht werden können. Dadurch bedingte, sehr große Lenkradwinkel werden vermieden, indem geeignete Motorwinkel überlagert werden, so dass mit Lenkradwinkeln üblicher Größe erforderliche Ausgangswinkel eingestellt werden können. Der zur Lenkunterstützung erforderliche Motorwinkel bzw. sein Sollwert wird aus dem Lenkradwinkel bestimmt. Darüber hinaus kann der Motorwinkel auch abhängig sein von Signalen, welche die durch Sensoren und/oder andere Fahrzeugsysteme, wie z.B. ein elektronisches Stabilitätsprogramm (ESP), erfassten Fahrzeugbewegungen repräsentieren. Dies erfolgt durch ein Steuergerät, auf welchem die für die Bestimmung der erforderlichen Motorwinkel bzw. die für die Steuerung der Nutzanwendungen erforderlichen Programme ausgeführt werden. Als Nutzeingangssignale werden z.B. Fahrzeuggeschwindigkeit, Ritzelwinkel, der Motorwinkel selbst und der Lenkradwinkel vom Steuergerät benötigt.

Aufgrund der Sicherheitsanforderungen an ein derartiges Lenksystem, ist ein Sicherheitskonzept mit Sicherheits- und Diagnosefunktionen, insbesondere um zufällige Fehler in der Sensorik, dem Steuergerät selbst oder der Aktuatorik zu entdecken und geeignet zu reagieren, d. h. beispielsweise die Nutzanwendungen, insbesondere die variable Lenkübersetzung geeignet zu schalten und/oder entsprechende Ersatzmaßnahmen zu starten, unerlässlich. Die Eingangssignale des Steuergeräts werden auf Plausibilität geprüft. Beispielsweise wäre es nachteilig ein verfälschtes Geschwindigkeitssignal zu akzeptieren, da die variable Lenkübersetzung u. a. geschwindigkeitsabhängig variiert wird.

Dazu ist es bekannt, die Sicherheitsfunktionen mit Prioritäten zu versehen und den Ersatzmaßnahmen matrixartig gegenüberzustellen. Dies wird programmtechnisch in der Regel mittels einer Statusmaschine (state machine) und eines Error-Handlers realisiert.

Relevante Sicherheitsnormen fordern eine hohe Güte entsprechender Sicherheits- bzw. Diagnosefunktionen oder mehrkanalige Konzepte mit weniger aufwändigen Diagnosefunktionen. Diese hohe Diagnosegüte ist schwer nachzuweisen. Ebenso scheiden aber z.B. doppelte Sensoren aus Kostengründen aus. Als Alternative ist beispielsweise die Berechnung von virtuellen Kanälen zu jedem Signal aus unabhängigen weiteren Signalen bekannt.

Der vorliegenden Erfindung liegt daher die Aufgabe zugrunde, ein Verfahren zum Betrieb eines Lenksystems, der eingangs erwähnten Art zu schaffen, welches die Nachteile des Standes der Technik vermeidet, insbesondere eine hohe Diagnosegüte der Sicherheitsfunktionen bei der Plausibilisierung der Nutzeingangssignale bereitstellt.

Erfindungsgemäß wird diese Aufgabe durch den kennzeichnenden Teil von Anspruch 1 gelöst.

Durch diese Maßnahmen wird das erfindungsgemäße Verfahren zum Betrieb eines Lenksystems in vorteilhafter Weise um ein Sicherheitsüberwachungsverfahren erweitert, welches die Plausibilität der Eingangssignale des Steuergeräts mittels geeigneter elektronikabhängiger und anwendungsbezogener Sicherheitsfunktionen überwacht und aufgrund der Überwachung die Nutzanwendungen (z.B. eine variable Lenkübersetzung) konfiguriert. Eine hohe Diagnosegüte wird durch die Bereitstellung von zusätzlichen virtuellen Kanälen zur Plausibilisierung von sicherheitskritischen Eingangssignalen geschaffen.

Von Vorteil ist es, wenn die elektronikabhängigen Sicherheitsfunktionen die Eingangssignale

- in einem ersten Schritt auf Kommunikationsfehler überprüfen;
- in einem zweiten Schritt eine Sensordiagnose durchführen; und
- in einem dritten Schritt einer Bereichs- und Gradientenüberprüfung unterziehen.

Die Signale werden dadurch in vorteilhafter Weise zuerst mit einer Kommunikationsprüfung zur Quelle hin, einer Sensordiagnose und einer Bereichs- und Gradientenüberprüfung versehen.

In einer verfahrensmäßigen Ausgestaltung der Erfindung, kann vorgesehen sein, dass die anwendungsbezogenen Sicherheitsfunktionen insbesondere die sicherheitskritischen Eingangssignale durch wenigstens ein weiteres virtuelles Signal überwachen, wobei das virtuelle Signal modellgestützt über andere unabhängige Eingangssignale berechnet wird.

Um bei den sicherheitsrelevanten Nutzsignalen, beispielsweise Fahrzeuggeschwindigkeit, Ritzelwinkel und Motorwinkel einen hinreichenden Aufdeckungsgrad für zufällige Fehler zu gewährleisten, wird ein virtueller zweiter Signalkanal geschaffen. Die virtuellen - durch Modelle über andere unabhängige Signale berechneten - Signalkanäle werden mit den Eingangssignalen der Sensoren verglichen. Je nach Abweichung werden dabei die Eingangssignale mit entsprechenden Zuständen bewertet, so dass die Nutzanwendungen nach diesen Zuständen geschaltet bzw. geeignete Ersatzmaßnahmen getroffen werden können.

Folgende Lösungen kommen dabei insbesondere in Frage.

Der Ritzelwinkel kann anhand von Raddrehzahlen, insbesondere von Vorderraddrehzahlen des Kraftfahrzeugs überprüft werden.

Der Motorwinkel kann mit Hilfe des Ritzelwinkels und des Lenkradwinkels über eine Zwangsbeziehung der drei Winkel im Rahmen des Lenksystems überwacht werden. Außerdem besteht die Möglichkeit den Motorwinkel auf Basis der Motorströme und -spannungen oder auf Basis der Motorströme und eines Lastmodells zu plausibilisieren.

Auch der Lenkradwinkel kann mittels des Motorwinkels und des Ritzelwinkels über die Zwangsbeziehung der drei Winkel im Rahmen des Lenksystems plausibilisiert werden.

Die Fahrzeuggeschwindigkeit kann anhand von Raddrehzahlen, insbesondere von Hinterraddrehzahlen des Kraftfahrzeugs überwacht werden. Dabei ist es vorteilhaft eventuelle Eingriffe seitens eines ESP zu berücksichtigen.

Erfindungsgemäß kann ferner vorgesehen sein, dass das Sicherheitsüberwachungsverfahren in mehrere Schichten gegliedert ist, welche die Eingangssignale des Steuergeräts auf Plausibilität überprüfen und anhand der Zustände der Eingangssignale die Nutzanwendungen des Lenksystems konfigurieren.

Dadurch ist das Sicherheitsüberwachungsverfahren modulartig in mehrere Schichten aufgeteilt, welche die einzelnen Gruppen von Sicherheitsfunktionen realisieren. Somit sind einzelne Routinen austauschbar, ohne das die über- / untergeordneten Schichten - definierte Schnittstellen zwischen den Schichten vorausgesetzt - betroffen sind. Des weiteren sind die einzelnen Schichten, welche in der Regel durch Statusmaschinen implementiert werden, einfacher verifizier- bzw. testbar. Darüber hinaus können auftretende Fehler in den einzelnen Schichten einfacher und schneller diagnostiziert werden.

Vorteilhaft ist, wenn eine Schicht als E/E/PES-Überwachungsschicht ausgebildet ist, welche die elektronikabhängigen Sicherheitsfunktionen ausführt.

Dadurch werden die hardwarenahen Sicherheitsfunktionen in einer separaten Schicht ausgeführt, welche die Grundfunktionalität des elektrisch/elektronischen/programmierbar elektronischen Systems (E/E/PES) überwacht.

Erfindungsgemäß kann ferner vorgesehen sein, dass eine Schicht als Anwendungsüberwachungsschicht ausgebildet ist, welche anwendungsbezogene Sicherheitsfunktionen ausführt.

Durch diese Maßnahme werden die anwendungsbezogenen Sicherheitsfunktionen ebenfalls getrennt überwacht.

In einer verfahrensmäßigen Ausgestaltung der Erfindung, kann vorgesehen sein, dass eine Schicht als Signalschicht ausgebildet ist, welche einen Signalstatus des Lenksystems bestimmt, wobei die Signalschicht dazu als Eingabe die Ergebnisse der E/E/PES-Überwachungsschicht und der Anwendungsüberwachungsschicht erhält.

Somit erhält die Signalschicht in vorteilhafter Weise über definierte Schnittstellen die Ergebnisse der E/E/PES-Überwachungsschicht und der Anwendungsüberwachungsschicht und kann dadurch den Signalstatus des Lenksystems bestimmen und diesen an die übergeordneten Schichten weitergeben. Von einem Austausch der Sicherheitsfunktionen in den unteren Schichten ist die Signalschicht nicht betroffen.

Vorteilhaft ist es, wenn eine Schicht als Systemstatusschicht ausgebildet ist, welche einen Systemstatus des Lenksystems bestimmt, wobei die Systemstatusschicht als Eingabe die Ergebnisse der Signalschicht und der Anwendungsüberwachungsschicht erhält. Vorteilhaft ist es außerdem, wenn eine Schicht als Anwendungskonfigurationsschicht ausgebildet ist, welche die Nutzanwendungen aufgrund des durch die Systemstatusschicht errechneten Systemstatus des Lenksystems und/oder der Ergebnisse der Signalschicht bestimmt.

Dadurch kann ein Gesamtstatus des Lenksystems bestimmt und die Nutzanwendungen entsprechend geschaltet werden. Falls beispielsweise keine verlässlichen Daten hinsichtlich der Geschwindigkeit des Kraftfahrzeugs existieren, müssen geeignete Ersatzmodi für die variable Lenkübersetzung geschaltet werden. Da insbesondere bei höheren Geschwindigkeiten eine zu direkte Lenkübersetzung gefährlich sein kann (z.B. Autobahnfahrt).

Vorteilhafte Weiterbildungen und Ausgestaltungen der Erfindung ergeben sich aus den weiteren Unteransprüchen. Nachfolgend sind anhand der Zeichnung Ausführungsbeispiele der Erfindung prinzipmäßig dargestellt.

Es zeigen:

Fig. 1 und 2     ein Schema des Lenksystems nach dem Stand der Technik, von dem die Erfindung im Ausführungsbeispiel ausgeht;

Fig. 3     ein Schema einer Signalplausibilisierungskette eines Sicherheitsüberwachungsverfahrens des erfindungsgemäßen Verfahrens; und

Fig. 4     eine weitere Ausführungsform einer Signalplausibilisierungskette eines Sicherheitsüberwachungsverfahrens des erfindungsgemäßen Verfahrens.

Im folgenden soll die Erfindung anhand eines Ausführungsbeispiels dargestellt werden. Dabei wird beispielhaft von einer eingangs erwähnten Überlagerungslenkung ausgegangen. Die Erfindung ist selbstverständlich auch bei anderen Lenksystemen, wie z.B. Steer by Wire, etc., einsetzbar.

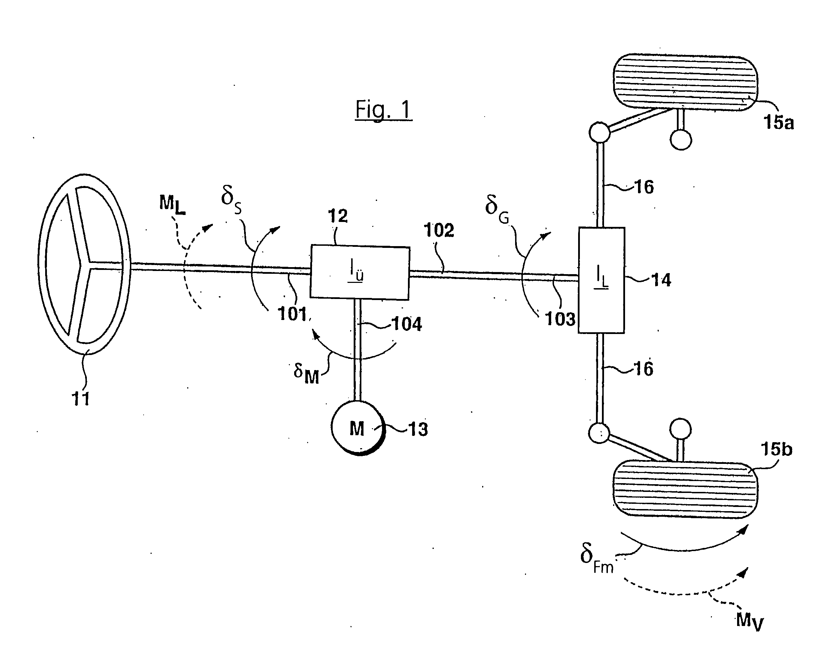

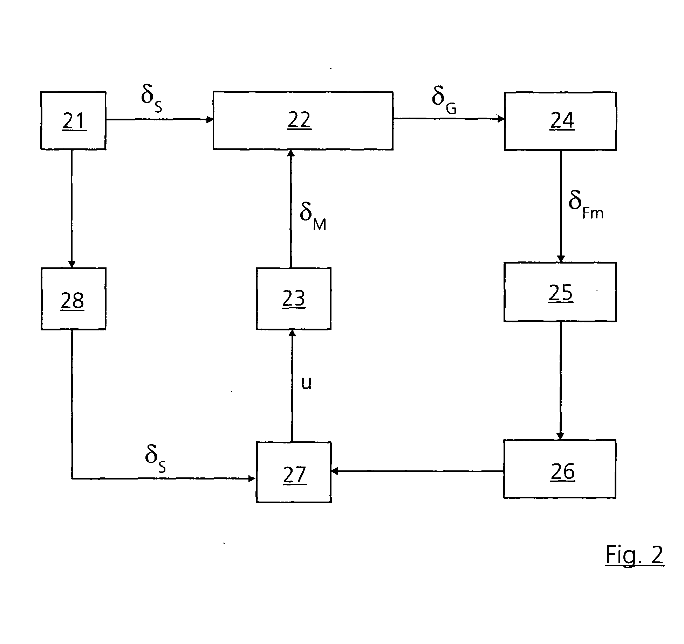

Die Fig. 1 bzw. Fig. 2 zeigt mit den Bezugszeichen 11 bzw. 21 ein von dem Fahrer des Fahrzeugs betätigbares Lenkrad. Durch die Betätigung des Lenkrades 11 bzw. 21 wird einem Überlagerungsgetriebe 12 bzw. 22 über eine Verbindung 101 ein Lenkradwinkel $\delta_S$ zugeführt. Gleichzeitig wird dem Überlagerungsgetriebe 12 bzw. 22 über eine Verbindung 104 ein Motorwinkel $\delta_M$ eines Stellantriebes 13 bzw. 23 zugeleitet, wobei der Stellantrieb als Elektromotor ausgebildet sein kann. Ausgangsseitig des Überlagerungsgetriebes 12 bzw. 22 wird eine überlagerte Bewegung bzw. ein Ritzelwinkel $\delta_G$ über eine Verbindung 102, 103 einem Lenkgetriebe 14 bzw. 24 zugeführt, das wiederum über ein Lenkgestänge 16 entsprechend der überlagerten Bewegung bzw. dem Gesamtwinkel $\delta_G$ lenkbare Räder 15a und 15b mit einem Lenkwinkel $\delta_{Fm}$ beaufschlagt. Die mechanische Übersetzung des Überlagerungsgetriebes 12 bzw. 22 für $\delta_M = 0$ ist mit $i_{\ddot{U}} = \delta_G/\delta_S$ und die mechanische Übersetzung des Lenkgetriebes 14 bzw. 24 mit dem Bezugszeichen $i_L$ bezeichnet.

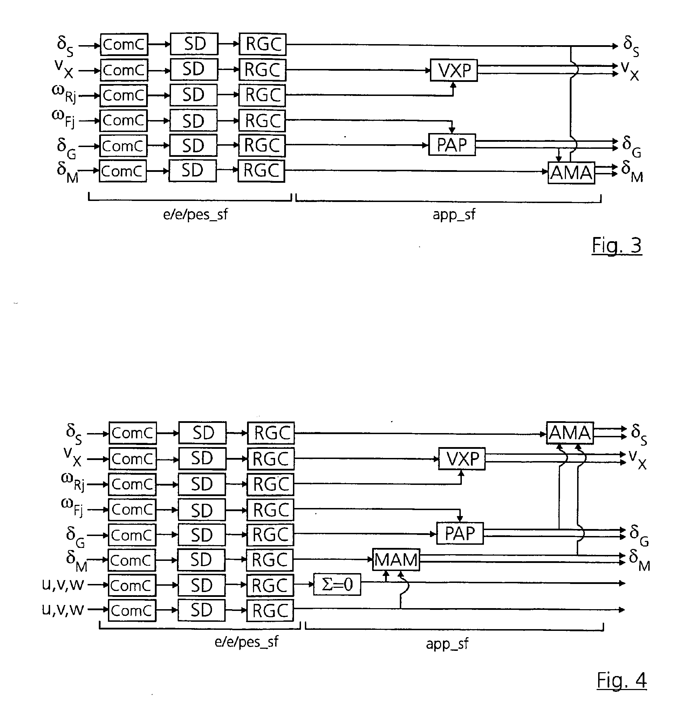

Auf die lenkbar ausgelegten Räder 15a und 15b wirkt ein von der Straße beeinflusstes Reaktionsmoment MV. In der Fig. 2 sind weiterhin Sensoren 26 und 28 dargestellt, wobei der Sensor 28 den Lenkradwinkel $\delta_S$ detektiert und einem Steuergerät 27 zuführt, während mit dem Bezugszeichen 26 Sensoren gekennzeichnet sind, die Bewegungen 25 des Fahrzeugs (bspw. Gierbewegungen, Querbeschleunigung, Raddrehzahlen, Fahrzeuggeschwindigkeit usw.) und den Ritzelwinkel $\delta_G$ detektieren und entsprechende Signale dem Steuergerät 27 zuführen. Das Steuergerät 27 ermittelt, abhängig vom erfassten Lenkradwinkel $\delta_S$ und ggf. abhängig von den Fahrzeugbewegungen 25 eine Stellgröße u zur Ansteuerung des Stellantriebs 13 bzw. 23 zur Realisierung von Nutzanwendungen (z.B. variable Lenkübersetzung - siehe Fig. 4 und 5). Die Signale der Sensoren 26 können auch einem CAN-Bussystem des Fahrzeugs entnommen werden.

Zwischen den in den Fig. 1 bzw. 2 dargestellten Winkeln und Drehmomenten gelten die bekannten Zusammenhänge ($i_L$ ist eine nichtlineare Funktion):

$$i_L(\delta_{Fm}) = [\delta_S/i_{\ddot{U}} + \delta_M] \qquad (1)$$

und

$$M_L = M_V / (i_L * i_{\ddot{U}}) \qquad (2)$$

Eine Servolenkfunktion wird durch das in den Fig. 1 und 2 gezeigte Lenksystem dadurch erreicht, dass durch eine große Gesamtübersetzung ($i_L * i_{\ddot{U}}$), d. h.

durch eine sehr indirekte Lenkung, das Lenkradmoment $M_L$ reduziert wird. Dem Lenkradwinkel $\delta_S$ wird ein Motorwinkel $\delta_M$ nach der o. g. Gleichung 1 überlagert, so dass ein gewünschter Vorderradwinkel $\delta_{Fm}$ mit einem nicht zu großen Lenkradwinkel eingestellt werden kann. Dabei können durch eine geeignete Ansteuerung des Motors Zusammenhänge zwischen dem Lenkradwinkel und dem Lenkwinkel realisiert werden, die auch vom Fahrzustand, beispielsweise der Fahrzeuggeschwindigkeit oder dem Lenkradwinkel, abhängen können.

Nach der o. g. Gleichung 2 ist das Lenkradmoment $M_L$ von dem Reaktionsmoment $M_V$ an den lenkbaren Rädern abhängig. Hierdurch ergibt sich das schon erwähnte Problem, dass durch die Wahl eines konstanten Übersetzungsverhältnisses des Lenkgetriebes kein für alle Fahrzustände akzeptables Lenkradmoment bzw. Lenkgefühl erreicht werden kann. Insbesondere darf das Lenkradmoment $M_L$ bei großen Lenkwinkeln im Stand nicht zu groß werden, während es bei Fahrten mit hoher Geschwindigkeit nicht zu klein werden darf.

Aufgrund der dadurch bedingten Sicherheitsanforderungen an das Lenksystem, ist ein Sicherheitskonzept mit Sicherheits- und Diagnosefunktionen, insbesondere, um zufällige Fehler in der Sensoren 26, 28, dem Steuergerät 27 selbst oder der Aktuatorik zu entdecken und geeignet zu reagieren, d. h. beispielsweise die Nutzanwendungen, insbesondere die variable Lenkübersetzung geeignet zu schalten und/oder entsprechende Ersatzmodi zu starten, unerlässlich. Die Eingangssignale des Steuergeräts 27, insbesondere $\delta_S$ und die fahrzeugspezifischen Daten der Sensoren 26, werden fortlaufend auf Plausibilität geprüft. Beispielsweise wäre es nachteilig, ein falsches Geschwindigkeitssignal $v_X$ des Fahrzeugs zu akzeptieren, da die variable Lenkübersetzung geschwindigkeitsabhängig variiert wird.

Fig. 3 zeigt die zum Betrieb des Lenksystems notwendigen Signale in einer ersten Ausführung einer Signalplausibilisierungskette. Hier ist der Lenkradwinkel $\delta_S$ als externes Signal bereits hinreichend plausibilisiert. Des weiteren sind Fahrzeuggeschwindigkeit $v_X$, Ritzelwinkel $\delta_G$, Phasenströme und - spannungen U, V, W des Motors 23 (in Fig. 4 gezeigt) sowie der Motorwinkel $\delta_M$ zum Betrieb der Nutzanwendungen (Lenkassistenz- und Aktuatorfunktionen) notwendig. Zur Plausibilisierung stehen zusätzlich noch die Raddrehzahlen, nämlich die Vorderraddrehzahlen $\omega_{Fj}$ und die Hinterraddrehzahlen $\omega_{Rj}$, zur Verfügung. Alle Signale werden eingangs einer Kommunikationsüberprüfung zur Quelle hin (ComC), einer Sensordiagnose (SD) und einer Bereichs- und Gradientenüberprüfung (RGC) unterzogen. Diese Überwachungsfunktionen gehören zur Klasse der elektronikabhängigen Sicherheitsfunktionen e/e/pes_sf.

Um bei den sicherheitsrelevanten Nutzsignalen $v_X$, $\delta_G$ und $\delta_M$ einen hinreichenden Aufdeckungsgrad für zufällige Fehler zu gewährleisten, wird ein virtueller zweiter Signalkanal erzeugt. D. h. mit Hilfe der anderen unabhängigen Signale werden diese Signale nochmals modellgestützt errechnet. Diese Überwachungsfunktionen gehören zur Klasse der anwendungsbezogenen Sicherheitsfunktionen app_sf.

Wie weiter aus Fig. 3 ersichtlich, wird die Fahrzeuggeschwindigkeit $V_X$ aus den Hinterraddrehzahlen $\omega_{Rj}$ ermittelt (VXP), der Ritzelwinkel $\delta_G$ aus den vorderen Raddrehzahlen $\omega_{Fj}$ (PAP) und der Motorwinkel $\delta_M$ aus der Summe von Lenkrad- $\delta_S$ und Ritzelwinkel $\delta_G$ (AMA). Es ist ebenfalls möglich, umgekehrt den Lenkradwinkel $\delta_S$ aus den anderen beiden Winkeln $\delta_G$ und $\delta_M$ zu bestimmen (siehe weitere Ausführungsform der Signalplausibilisierungskette nach Fig. 4). Dazu ist es sinnvoll, den Motorwinkel über die Phasenmotorströme und -spannungen U, V, W (z.B. über Gegeninduktion) oder auf Basis der Motorströme U, V, W und eines geeigneten Lastmodell zu plausibilisieren (MAM). Wie aus Fig. 4 ersichtlich ergibt die Summe der Phasenströme 0. MAM kann sowohl durch die elektronikabhängigen Sicherheitsfunktionen e/e/pes_sf als auch durch die anwendungsbezogenen Sicherheitsfunktionen app_sf plausibilisiert werden, je nachdem, ob ein Lastmodell integriert ist, oder nicht.

Problematisch kann bei der Zuhilfenahme der Raddrehzahlen zur Plausibilisierung ein Eingreifen des ESP (elektronisches Stabilitätsprogramm) sein, da dieses die Raddrehzahlen beeinflusst. Um dieser Problematik zu begegnen, muss zwangsläufig der Status des ESP überwacht werden (z.B. durch Prüfen der ESP-Statusbits) und dieser in der Plausibilisierung entsprechend berücksichtigt werden (z.B. durch Auswahl der Raddrehzahlen unbeeinflusster Räder).

Die modellbasierten Überwachungsfunktionen (z.B. VXP, AMA, PAP, MAM) zur Generierung eines zweiten Signalkanals haben eine gemeinsame Struktur: zur Berechnung des Signals steht ein verifiziertes Modell zur Verfügung, dessen Eingänge zunächst gefiltert werden. Der Unterschied zwischen gemessenem und errechnetem Signal wird dann in seiner Größe beurteilt und diese Qualitätsaussage ggf. über einen gewissen Zeitraum gefiltert. Zudem muss entschieden werden, ob das Modell im derzeitigen Fahrzustand gültig ist.

Zur Beurteilung der einzelnen Signale müssen die Informationen aus allen beteiligten Überwachungsfunktionen ausgewertet werden. Je nach Status der einzelnen Nutzsignale (OK, NOT OK, DON'T TRUST) werden dann die Lenkassistenzfunktionen in entsprechende Modi überführt.

Nachstehend werden die anwendungsbezogenen Sicherheitsfunktionen AMA und PAP näher erläutert.

Die Sicherheitsfunktion AMA (Winkelüberwachung - Angle Monitoring Algorithm) überwacht die kinematische Zwangsbeziehung zwischen den drei Winkeln des Überlagerungslenksystems (vgl. Gleichung (2)). D. h. der Motorwinkel $\delta_M$ bzw. der Lenkradwinkel $\delta_S$ wird mit Hilfe von Ritzelwinkel $\delta_G$ und Lenkradwinkel $\delta_S$ bzw. Motorwinkel $\delta_M$ plausibilisiert. Dabei wird die Summengleichung (2) benutzt, um aus zwei bereits plausibilisierten Winkeln den dritten zu bestimmen. Bei einer Plausibilisierung des Lenkradwinkels $\delta_S$ können in vorteilhafter Weise geringere Anforderungen an den Lenkradwinkelsensor 28 gestellt werden. Dies ergibt eine höhere Verfügbarkeit des Gesamtlenksystems durch die dadurch geschaffene zusätzliche Rückfallebene.

Die Sicherheitsfunktion PAP (Pinion Angle Plausibility Check) berechnet den Ritzelwinkel $\delta_G$ aus den beiden vorderen Raddrehzahlen $\omega_{Fj}$ und vergleicht den errechneten Wert mit dem Sensorwert.

In einem weiteren Ausführungsbeispiel könnte eine anwendungsbezogene Sicherheitsfunktion den Ritzelwinkel $\delta_G$ auch rechnerisch ermitteln (basierend auf der Sicherheitsfunktion AMA mit Motor- $\delta_M$ und Lenkradwinkel $\delta_S$ als Nutzsignaleingängen) und auf der Basis der Sicherheitsfunktion PAP plausibilisieren, wodurch ein Ritzelwinkelsensor überflüssig würde. Dabei würden jedoch erhöhte Anforderungen an den Lenkradwinkel $\delta_S$ und den Lenkradwinkelsensor 28 gestellt.

Denkbar ist des weiteren, die Fahrzeuggeschwindigkeit $v_X$ auf Basis der vier Raddrehzahlen $\omega_{Fj}$, $\omega_{Rj}$ sowohl zu berechnen als auch zu plausibilisieren. Somit kann das Einlesen des Fahrzeuggeschwindigkeitsignals $v_X$ in vorteilhafter Weise entfallen. Dabei wird derart vorgegangen, dass möglichst diejenigen Raddrehzahlen $\omega_{Fj}$, $\omega_{Rj}$ zur Berechnung herangezogen werden die wenigstens annähernd übereinstimmen.

Darüber hinaus ist es sehr vorteilhaft, wenn bei allen Berechnungen und Plausibilisierungen, bei welchen Raddrehzahlen $\omega_{Fj}$, $\omega_{Rj}$ verwendet werden, die Statusinformationen der ESP- und/oder ABS-Systeme über mögliche Eingriffe berücksichtigt werden.

Das Sicherheitsüberwachungsverfahren für das Lenksystem im Rahmen des erfindungsgemäßen Verfahrens zum Betrieb eines Lenksystems ist in mehrere Schichten gegliedert (nicht dargestellt) und als Computerprogramm auf dem Steuergerät 27 realisiert (in weiteren Ausführungsbeispielen sind selbstverständlich auch andere Implementierungsvarianten denkbar). Dabei werden die Eingabedaten des Steuergeräts 27 mittels geeigneter Sicherheitsfunktionen auf Plausibilität geprüft. Anhand der Ergebnisse des Sicherheitsüberwachungsverfahrens werden die Nutzanwendungen des Lenksystems konfiguriert, d. h. der Stellantrieb 13, 23 zur Initiierung der Bewegung $\delta_M$ durch das Steuersignal u des Steuergeräts 27 entsprechend angesteuert.

Eine E/E/PES-Überwachungsschicht dient der Überwachung des elektrisch / elektronischen / programmierbaren elektronischen Systems (E/E/PES) und führt die elektronikabhängigen Sicherheitsfunktionen e/e/pes_sf aus.

Eine Anwendungsüberwachungsschicht führt anwendungsbezogene Sicherheitsfunktionen app_sf, z.B. die Überwachung AMA der Summe der Winkel des Lenksystems ($\delta_S$, $\delta_M$) aus.

Eine Signalschicht wird verwendet, welche einen Signalstatus des Lenksystems bestimmt, wobei die Signalschicht als Eingabe die Ergebnisse der E/E/PES-Überwachungsschicht und der Anwendungsüberwachungsschicht erhält.

Eine Systemstatusschicht bestimmt einen Systemstatus des Lenksystemstatus anhand der Ergebnisse der Signalschicht und der Anwendungsüberwachungsschicht.

Eine Anwendungskonfigurationsschicht konfiguriert die Nutzanwendungen aufgrund des durch die Systemstatusschicht errechneten Systemstatus des Lenksystems und der Ergebnisse der Signalschicht, d. h. die Anwendungskonfigurationsschicht schaltet die Nutzanwendungen, beispielsweise die variable Lenkübersetzung und startet falls erforderlich entsprechende Ersatzmodi.

Bezugszeichen

| | |
|---|---|
| 11 | Lenkrad |
| 12 | Überlagerungsgetriebe |
| 13 | Stellantrieb |
| 14 | Lenkgetriebe |
| 15a | Räder |
| 15b | Räder |
| 16 | Lenkgestänge |
| | |
| 21 | Lenkrad |
| 22 | Überlagerungsgetriebe |
| 23 | Stellantrieb |
| 24 | Lenkgetriebe |
| 25 | Fahrzeugbewegungen |
| 26 | Sensoren |
| 27 | Steuergerät |
| 28 | Sensoren |
| | |
| 101 | Verbindung |
| 102 | Verbindung |
| 103 | Verbindung |
| 104 | Verbindung |
| | |
| $\delta_S$ | Lenkradwinkel |
| $\delta_M$ | Motorwinkel |
| $\delta_G$ | überlagerte Bewegung |
| $\delta_{Fm}$ | Lenkwinkel |
| $i_\ddot{U}$ | mech. Übersetzung des Überlagerungsgetriebes |
| $i_L$ | mech. Übersetzung des Lenkgetriebes |
| $M_V$ | Reaktionsmoment |
| $M_L$ | Lenkradmoment |
| $\omega_{Rj}$ | Hinterraddrehzahlen |
| $\omega_{Fj}$ | Vorderraddrehzahlen |
| $v_X$ | Fahrzeuggeschwindigkeit |

| | |
|---|---|
| e/e/pes_sf | hardwarenahe Sicherheitsfunktionen |
| app_sf | applikationsbezogene Sicherheitsfunktionen |
| ComC | Kommunikationsüberprüfung |
| SD | Sensordiagnostik |
| RGC | Bereichs- und Gradientenüberprüfung |
| VXP | Geschwindigkeitsüberwachung |
| PAP | Ritzelwinkelplausibilisierung |
| AMA | Winkelsummenüberwachung |
| MAM | Motorwinkelüberwachung |
| UVW | Phasenströme- und spannungen |

**Patentansprüche**

1. Verfahren zum Betrieb eines Lenksystems für ein Kraftfahrzeug mit wenigstens einem lenkbaren Rad (15), wobei eine durch den Fahrer des Kraftfahrzeugs initiierte Lenkbewegung ($\delta_S$) und/oder weitere fahrzeugspezifische Parameter, insbesondere die Fahrzeuggeschwindigkeit ($v_V$), als Eingangssignale von einem Steuergerät (27) empfangen werden und daraus ein Steuersignal (u) zur Erzeugung der Lenkbewegung des lenkbaren Rades ($\delta_{Fm}$), insbesondere zur Realisierung von Nutzanwendungen, ermittelt wird,
**gekennzeichnet durch** ein Sicherheitsüberwachungsverfahren des Lenksystems **durch** eine Überwachung der Eingangssignale des Steuergeräts (27) mittels Sicherheitsfunktionen (e/e/pes_sf, app_sf), wobei in einem ersten Schritt die Eingangssignale mit elektronikabhängigen Sicherheitsfunktionen (e/e/pes_sf) und in einem zweiten Schritt zusätzlich mit anwendungsbezogenen Sicherheitsfunktionen (app_sf) plausibilisiert werden, wobei für wenigstens ein Eingangssignal ein Zustand bestimmt wird, anhand dessen die Nutzanwendungen des Lenksystems konfiguriert werden.

2. Verfahren nach Anspruch 1,
**dadurch gekennzeichnet, dass** ein Stellantrieb (13;23) und ein Überlagerungsgetriebe (12;22) vorgesehen sind, wobei durch das Überlagerungsgetriebe (12;22) die durch den Fahrer des Fahrzeugs initiierte Lenkbewegung ($\delta_S$) und die durch den Stellantrieb (13;23) initiierte Bewegung ($\delta_M$) zur Erzeugung der Lenkbewegung des lenkbaren Rades ($\delta_{Fm}$) zur Realisierung der Nutzanwendungen (48) in einen Ritzelwinkel ($\delta_G$) überlagert werden, wobei der Stellantrieb (13;23) zur Initiierung der Bewegung ($\delta_M$) durch das Steuersignal (u) des Steuergeräts (27) angesteuert wird.

3. Verfahren nach Anspruch 1 oder 2,
**dadurch gekennzeichnet , dass** die elektronikabhängigen Sicherheitsfunktionen (e/e/pes_sf) die Eingangssignale

- in einem ersten Schritt auf Kommunikationsfehler überprüfen (ComC);
- in einem zweiten Schritt eine Sensordiagnose durchführen (SD); und
- in einem dritten Schritt einer Bereichs- und Gradientenüberprüfung unterziehen (RGC).

**4.** Verfahren nach Anspruch 1, 2 oder 3,
**dadurch gekennzeichnet, dass** die anwendungsbezogenen Sicherheitsfunktionen (app_sf) insbesondere die sicherheitsrelevanten Eingangssignale durch wenigstens ein weiteres virtuelles Signal überwachen, wobei das virtuelle Signal modellgestützt über andere unabhängige Eingangssignale berechnet wird.

**5.** Verfahren nach Anspruch 4,
**dadurch gekennzeichnet, dass** der Ritzelwinkel ($\delta_G$) als sicherheitsrelevantes Eingangssignal anhand von Raddrehzahlen, insbesondere von Vorderraddrehzahlen ($\omega_{Fj}$) des Kraftfahrzeugs plausibilisiert wird (PAP).

**6.** Verfahren nach Anspruch 4 oder 5,
**dadurch gekennzeichnet, dass** der Motorwinkel ($\delta_M$) als sicherheitsrelevantes Eingangssignal mit Hilfe des Ritzelwinkels ($\delta_G$) und des Lenkradwinkels ($\delta_S$) über eine Zwangsbeziehung der drei Winkel im Rahmen des Lenksystems plausibilisiert wird (AMA).

**7.** Verfahren nach Anspruch 3, 4 oder 5,
**dadurch gekennzeichnet, dass** der Motorwinkel ($\delta_M$) als sicherheitsrelevantes Eingangssignal auf Basis der Motorströme und - spannungen (U,V,W) oder auf Basis der Motorströme (U,V,W) und eines Lastmodells durch die elektronikabhängigen Sicherheitsfunktionen (e/e/pes_sf) bzw. durch die anwendungsbezogenen Sicherheitsfunktionen (app_sf) plausibilisiert wird (MAM).

**8.** Verfahren nach Anspruch 4 oder 5,
**dadurch gekennzeichnet, dass** der Lenkradwinkel ($\delta_S$) als sicherheitsrelevante Eingangssignal mit Hilfe des Motorwinkels ($\delta_M$) und des Ritzelwinkels ($\delta_G$) über eine Zwangsbeziehung der drei Winkel im Rahmen des Lenksystems plausibilisiert wird (AMA).

**9.** Verfahren nach einem der Ansprüche 4 bis 8,
**dadurch gekennzeichnet, dass** die Fahrzeuggeschwindigkeit ($v_X$) als sicherheitsrelevantes Eingangssignal anhand von Raddrehzahlen, insbesondere Hinterraddrehzahlen ($\omega_{Rj}$) des Kraftfahrzeugs plausibilisiert wird (VXP).

**10.** Verfahren nach einem der Ansprüche 4 bis 8,
**dadurch gekennzeichnet, dass** die Fahrzeuggeschwindigkeit ($v_X$) als sicherheitsrelevantes Eingangssignal anhand von Raddrehzahlen ($\omega_{Rj}$, $\omega_{Fj}$) des Kraftfahrzeugs sowohl berechnet als auch plausibilisiert wird (VXP).

**11.** Verfahren nach einem der Ansprüche 1 bis 10,
**dadurch gekennzeichnet, dass** das Sicherheitsüberwachungsverfahren in mehrere Schichten gegliedert ist, welche die Eingangssignale des Steuergeräts (27) auf Plausibilität überprüfen und anhand der Zustände der Eingangssignale die Nutzanwendungen des Lenksystems konfigurieren.

**12.** Verfahren nach Anspruch 11,
**dadurch gekennzeichnet, dass** eine Schicht als E/E/PES-Überwachungsschicht ausgebildet ist, welche die elektronikabhängigen Sicherheitsfunktionen (e/e/pes_sf) ausführt.

**13.** Verfahren nach Anspruch 11 oder 12,
**dadurch gekennzeichnet, dass** eine Schicht als Anwendungsüberwachungsschicht ausgebildet ist, welche die anwendungsbezogenen Sicherheitsfunktionen (app_sf) ausführt.

**14.** Verfahren nach Anspruch 13,
**dadurch gekennzeichnet, dass** eine Schicht als Signalschicht ausgebildet ist, welche einen Signalstatus des Lenksystems bestimmt, wobei die Signalschicht dazu als Eingabe die Ergebnisse der E/E/PES-Überwachungsschicht und der Anwendungsüberwachungsschicht erhält.

**15.** Verfahren nach Anspruch 14,
**dadurch gekennzeichnet, dass** eine Schicht als Systemstatusschicht ausgebildet ist, welche einen Systemstatus des Lenksystems bestimmt, wobei die Systemstatusschicht als Eingabe die Ergebnisse der Signalschicht, und der Anwendungsüberwachungsschicht erhält.

**16.** Verfahren nach Anspruch 15,
**dadurch gekennzeichnet, dass** eine Schicht als Anwendungskonfigurationsschicht verwendet wird, welche die Nutzanwendungen aufgrund des durch die Systemstatusschicht errechneten Systemstatus des Lenksystems und/oder der Ergebnisse der Signalschicht bestimmt.

**17.** Computerprogramm mit Programmcodemitteln, um ein Verfahren gemäß einem der Ansprüche 1 bis 16 durchzuführen, wenn dass Programm auf einem Computer, insbesondere auf dem Steuergerät (27) des Lenksystems, ausgeführt wird.

**18.** Steuergerät (27) für ein Lenksystem zur Ausführung eines Computerprogramms gemäß Anspruch 17.

Fig. 1

EP 1 568 572 A2

Fig. 2

Fig. 3

Fig. 4